# EUROPÄISCHE PATENTSCHRIFT

(11) **EP 1 839 080 B1**
(45) Veröffentlichungstag und Bekanntmachung des Hinweises auf die Patenterteilung: **29.06.2011**
(21) Anmeldenummer: 06700882.1
(22) Anmeldetag: 13.01.2006
(51) Int. Cl.: G02B 6/44

(54) **OPTISCHES KABEL**
OPTICAL CABLE
CABLE OPTIQUE

(30) Priorität: 17.01.2005 DE 102005002186
(43) Veröffentlichungstag der Anmeldung: 03.10.2007
(73) Patentinhaber: CCS Technology, Inc., Wilmington, DE 19803 (US)
(72) Erfinder: WICH, Karl-heinz, 96364 Marktrodach (DE); TISCHER, Swen, 96465 Neustadt Bei Coburg (DE)
(74) Vertreter: Epping - Hermann - Fischer
(86) Internationale Anmeldenummer: PCT/EP2006/000288
(87) Internationale Veröffentlichungsnummer: WO 2006/074953

(56) Entgegenhaltungen:
- EP-A- 0 559 382
- EP-A- 0 996 015
- EP-A- 1 050 770
- EP-A- 1 310 814
- EP-A1- 1 164 396
- US-A- 4 446 686
- US-A- 4 743 085
- US-A- 4 770 489

## Beschreibung

Die Erfindung betrifft ein optisches Kabel. Die Erfindung betrifft außerdem eine Anordnung und ein Verfahren zur Verbindung einer Vielzahl von Lichtwellenleitern. Die Anordnung und das Verfahren betreffen insbesondere die Verkabelung eines Rangierfeldes in einem Verteilerschrank.

### Stand der Technik

Ein Verteilerschrank ist beispielsweise über eine erste Verkabelung an ein Kommunikationsnetz und über eine zweite Verkabelung an eine Peripherie mit Anschlussbuchsen für Endgeräte angeschlossen. Die Endgeräte, beispielsweise Computer, können über Anschlusskabel an die Anschlussbuchsen der Peripherie angeschlossen werden. In dem Verteilerschrank sind insbesondere Rangierfelder untergebracht. Rangierfelder werden auch als Patchfelder bezeichnet.

Ein Rangierfeld dient zur Konfiguration der Verbindungen zwischen dem Kommunikationsnetz und der Peripherie. Das Rangierfeld weist üblicherweise ein Feld von Anschlüssen auf, die auf einer Frontplatte angeordnet sind. Jeder Anschlussbuchse der Peripherie ist ein Anschluss auf der Frontplatte des Rangierfelds zugeordnet. Dem Kommunikationsnetz sind üblicherweise mehrere dieser Anschlüsse zugeordnet.

Die Lichtwellenleiter eines optischen Kabels der ersten Verkabelung oder der zweiten Verkabelung werden in dem Verteilerschrank vereinzelt, von der Rückseite der Frontplatte her den Anschlüssen des Rangierfelds zugeführt und in den Anschlüssen fixiert. Auf der Vorderseite der Frontplatte werden jeweils zwei der Anschlüsse über ein Rangierkabel miteinander verbunden.

Bisher bekannte Rangierkabel für optische Kabelnetze sind als Festaderkabel (SFC = Single Fiber Cable) oder Bändchenkabel (RC = ribbon cable) ausgeführt.

Ein als Festaderkabel ausgeführtes Rangierkabel enthält nur einen einzigen Lichtwellenleiter, der von einem schützenden Kabelmantel umgeben ist. Über ein Festaderkabel können nur jeweils ein Lichtwellenleiter der ersten Verkabelung und ein Lichtwellenleiter der zweiten Verkabelung miteinander verbunden werden. Die Verkabelung eines Rangierfelds, das an eine hohe Anzahl von Lichtwellenleitern der ersten und der zweiten Verkabelung angeschlossen ist, erfordert daher eine hohe Anzahl von Rangierkabeln. Da der Kabelmantel jedes Festaderkabels eine gewisse Dicke aufweist, ist der Platzbedarf für die hohe Anzahl von Rangierkabeln erheblich. Wenn zur Verringerung des Platzbedarfs eines Rangierkabels die Dicke des Kabelmantels verringert wird, muß eine geringere zufestigkeit des Rangierkabels in Kauf genommen werden.

Ein als Bändchenkabel ausgeführtes Rangierkabel enthält mehrere Lichtwellenleiter, die in einer Reihe nebeneinander zu einem Bändchen angeordnet sind. Es können auch mehrere solcher Bändchen zu einem Stapel angeordnet sein. Jeder dieser Lichtwellenleiter ist von einer Umhüllung umgeben. Die Umhüllungen benachbarter Lichtwellenleiter sind miteinander verbunden, beispielsweise verklebt oder verschmolzen. Über ein Bändchenkabel können mehrere Lichtwellenleiter der ersten Verkabelung und der zweiten Verkabelung miteinander verbunden werden. Aufgrund der besonderen Anordnung der Lichtwellenleiter weist ein Bändchenkabel jedoch eine Vorzugsbiegerichtung auf. Sobald das Rangierkabel mit einem ersten der Anschlüsse des Rangierfelds verbunden wird, ist die Vorzugsbiegerichtung bezogen auf die Lage des Feldes der Anschlüsse festgelegt. Die Möglichkeiten zur Führung eines Bändchenkabels auf der Vorderseite der Frontplatte sind daher eingeschränkt. Beim Konfektionieren eines Bändchenkabels werden zunächst die Lichtwellenleiter vereinzelt, indem die zu einem Bändchen verklebten Umhül'lungen getrennt werden. Dann werden die Lichtwellenleiter freigelegt, indem die Umhüllungen einzeln abgesetzt werden. Das Konfektionieren eines Bändchenkabels ist also schwieriger als das Konfektionieren eines Festaderkabels.

### Allgemeine Darstellung der Erfindung

Es ist dementsprechend die Aufgabe der Erfindung, ein optisches Kabel anzugeben, das eine hohe Flexibilität ohne Vorzugsbiegerichtung aufweist und einfach zu konfektionieren ist.

Die Aufgabe wird erfindungsgemäß durch ein optisches Kabel mit den Merkmalen des Anspruchs 1 gelöst. Bevorzugte Ausgestaltungen sind in den Unteransprüchen angegeben.

Das optische Kabel umfasst einen Kabelmantel und genau eine Ader, die von dem Kabelmantel umgeben ist. Die genau eine A-der enthält mehrere erste Lichtwellenleiter. Das optische Kabel und die Ader weisen jeweils einen runden Querschnitt auf. Das optische Kabel ist dazu ausgebildet, eine optische Verbindung zwischen weiteren Lichtwellenleitern herzustellen.

In dem optischen Kabel ist eine einzelne zentral angeordnete Ader, die mehrere erste Lichtwellenleiter enthält, von einem schützenden Kabelmantel umgeben. Die Verkabelung eines Rangierfelds mit vielen dieser optischen Kabel benötigt daher weniger Platz als die Verkabelung des gleichen Rangierfelds mit Festaderkabeln. Die Flexibilität des optischen Kabels ist von der Biegerichtung unabhängig. Der kleinste Biegeradius ist also für jede Biegerichtung gleich. Im Vergleich zu einem Bändchenkabel ist das optische Kabel einfacher zu konfektionieren.

Die Ader umfasst vorzugsweise eine Aderhülle, die die ersten Lichtwellenleiter umgibt und von dem Kabelmantel umgeben ist. Die Aderhülle weist eine geringe Reißdehnung auf, so dass sie schnell und ohne Werkzeug auch in größeren Längen entfernt (abgesetzt) werden kann, um die ersten Lichtwellenleiter freizulegen. Die Aderhülle kann ein mit einem Zuschlagstoff gefülltes Polymer umfassen, das Ethyl-Vinyl-Acetat, Poly-Vinyl-Chlorid oder ein thermoplastisches Elastomer (TPE) enthält.

Die Aderhülle umgibt vorzugsweise einen trockenen Innenraum, ist also insbesondere frei von einer thixotropen Füllmasse. Da beim Konfektionieren folglich keine Füllmasse austreten kann, ist das optische Kabel sehr gut als Innenkabel verwendbar.

Die ersten Lichtwellenleiter weisen in bezug auf den Kabelmantel vorzugsweise eine Überlänge auf. Beim Biegen oder Drehen können daher keine übermäßigen mechanischen Spannungen in den Lichtwellenleitern auftreten. Das optische Kabel weist daher einen geringen kleinsten Biegeradius auf. Auch eine Verseilung der ersten Lichtwellenleiter ist denkbar.

Zwischen der Ader bzw. Aderhülle und dem Kabelmantel ist eine erste Zugentlastungsanordnung ausgebildet. Die erste Zugentlastungsanordnung umfasst vorzugsweise mehrere Stränge, die in gleichmäßiger Verteilung um die Ader angeordnet sind. Die erste Zugentlastungsanordnung ist dazu ausgebildet, am Ende des Kabels eingeleitete Zugspannungen aufzunehmen.

Die ersten Lichtwellenleiter weisen eine Anzahl von 2 bis 12 auf. Bei der Verkabelung eines Rangierfelds wirkt sich der verglichen mit herkömmlichen Rangierkabeln geringere Platzbedarf des optischen Kabels mit steigender Anzahl der von dem Kabelmantel umgebenen der ersten Lichtwellenleiter immer stärker aus.

Zumindest einer der ersten Lichtwellenleiter kann zur Führung genau einer optischen Mode ausgebildet sein. Mindestens einer der ersten Lichtwellenleiter kann aber auch zur Führung mehrerer optischer Moden ausgebildet sein.

Das optische Kabel wist einen Außendurchmesser von bis zu 3,0 mm auf. Dieser Wert entspricht ungefähr dem Durchmesser eines Festaderkabels. Mit einem erfindungsgemäßen optischen Kabel wird jedoch eine größere Anzahl von Lichtwellenleitern verkabelt als mit einem Festaderkabel.

Eine Anordnung zur Verbindung einer Vielzahl von Lichtwellenleitern umfasst ein Feld von Anschlüssen sowie mindestens ein optisches Kabel, das genau eine Ader mit mehreren ersten Lichtwellenleitern enthält. Die Ader und das Kabel weisen jeweils einen runden Querschnitt auf. In jeweils einem der Anschlüsse ist zumindest einer aus einer Vielzahl von weiteren Lichtwellenleitern fixiert. Das optische Kabel ist dazu ausgebildet, eine optische Verbindung zwischen einem ersten und einem zweiten der Anschlüsse herzustellen.

Der erste und/oder zweite der Anschlüsse umfasst vorzugsweise ein Steckverbindungselement zur Herstellung einer steckbaren optischen Verbindung zwischen Lichtwellenleitern. Eine steckbare optische Verbindung zwischen Lichtwellenleitern wird üblicherweise über ein Paar von Steckverbindungselementen hergestellt, in denen jeweils einer der optisch zu koppelnden Lichtwellenleiter fixiert ist. Die Steckverbindungselemente des Paares können mechanisch so gekoppelt werden, dass Endflächen der optisch zu koppelnden Lichtwellenleiter einander gegenüberliegen und der Übertritt von Licht vom einen in den anderen der Lichtwellenleiter möglich ist. Eine Steckverbindung kann üblicherweise mehrere tausend Mal gelöst und neu hergestellt werden, ehe das dazu verwendete Paar von Steckverbindungselementen verschlissen ist. Ein Paar von Steckverbindungselementen kann einen Stecker und eine Buchse umfassen. Die Steckverbindungselemente eines Paares können aber auch gleich ausgebildet sein.

Das Steckverbindungselement des ersten und/oder zweiten der Anschlüsse kann zur Herstellung genau einer optischen Verbindung ausgebildet sein. In dem Steckverbindungselement ist dann genau einer der weiteren Lichtwellenleiter fixiert.

Das Steckverbindungselement des ersten und/oder zweiten der Anschlüsse kann zur Herstellung mehrerer optischer Verbindungen zwischen jeweils zwei Lichtwellenleitern ausgebildet sein. In dem Steckverbindungselement sind dann mehrere der weiteren Lichtwellenleiter fixiert. Insbesondere kann in dem Steckverbindungselement eine der Anzahl der ersten Lichtwellenleiter gleiche Anzahl der weiteren Lichtwellenleitern fixiert sein.

Ein in dem ersten und/oder zweiten der Anschlüsse fixierter der weiteren Lichtwellenleiter kann auch mit jeweils einem der ersten Lichtwellenleiter des optischen Kabels verschweißt sein. Auf diese Weise kann das optische Kabel fest mit dem ersten und/oder zweiten der Anschlüsse verbunden und der Platz für die Steckverbindungselemente eingespart werden.

Eine erste Gruppe der weiteren Lichtwellenleiter ist vorzugsweise über einen optischen Verteiler an einen gemeinsamen Lichtwellenleiter gekoppelt. Zwischen dem gemeinsamen Lichtwellenleiter und den weiteren Lichtwellenleitern der ersten Gruppe sind optische Signale austauschbar. Die Lichtwellenleiter der ersten Gruppe erhalten daher jeweils das gleiche optische Signal. Einer der weiteren Lichtwellenleiter der ersten Gruppe ist an den ersten der Anschlüsse angeschlossen.

Ein Verfahren zur Herstellung eines optischen Kabels umfasst mehrere Schritte. Zunächst wird ein optisches Kabel bereitgestellt, das genau eine Ader aufweist, die mehrere erste Lichtwellenleiter enthält. Das Kabel und die genau eine Ader weisen jeweils einen runden Querschnitt auf.

Die ersten Lichtwellenleiter werden an zumindest einem Ende des Kabels freigelegt. Jeweils ein erster und ein zweiter aus einer Vielzahl von weiteren Lichtwellenleitern werden über jeweils einen der ersten Lichtwellenleiter optisch gekoppelt. Der runde Querschnitt des Kabels und der Ader bewirken, dass das Kabel eine von der Richtung unabhängige hohe Flexibilität aufweist. Die hohe Flexibilität erlaubt die Verkabelung eines Rangierfelds nahezu unabhängig von der relativen Lage der mehreren ersten und zweiten Anschlüsse.

Das optische Kabel wird beispielsweise hergestellt, indem die ersten Lichtwellenleiter einer Fertigungslinie zugeführt werden und dort mit einer Aderhülle umgeben werden, um die Ader zu bilden. Die Ader wird mit einer ersten Zugentlastungsanordnung und dem Kabelmantel umgeben. Die erste Zugentlastungsanordnung umfasst in der Regel fadenförmige Zugentlastungselemente. Da die Aderhülle zwischen den mehreren Lichtwellenleitern und den Zugentlastungselementen angeordnet ist, können die mehreren Lichtwellenleiter und die Zugentlastungselemente getrennt gehalten und bei der Konfektionierung des Kabels leicht nacheinander entfernt werden.

Zur Verkabelung eines Rangierfelds wird vorzugsweise ein Kabel bereitgestellt, dessen Ader eine Aderhülle mit einer geringen Reißdehnung aufweist und dessen erste Zugentlastungsanordnung zwischen der Aderhülle und dem Kabelmantel angeordnet ist. An einem Ende des optischen Kabels wird ein Abschnitt des Kabelmantels entfernt, um die erste Zugentlastungsanordnung freizulegen. Dann wird ein Abschnitt der ersten Zugentlastungsanordnung entfernt, um die Aderhülle freizulegen. Dann wird ein Abschnitt der Aderhülle entfernt, um die ersten Lichtwellenleiter freizulegen. Da die Aderhülle mit einer geringen Reißdehnung ausgebildet wird, ist das optische Kabel nach dem Entfernen des Kabelmantels ohne Einsatz von Werkzeugen konfektionierbar.

Zur Verkabelung eines Rangierfelds kann das optische Kabel mit einer Anschlussvorrichtung bereitgestellt werden. Die Anschlussvorrichtung ist zur Herstellung einer optischen Verbindung zu jeweils einem der ersten Lichtwellenleiter ausgebildet. Die Anschlussvorrichtung kann ein erstes Steckverbindungselement zur Herstellung mehrerer steckbarer optischer Verbindungen umfassen. Die Anschlussvorrichtung kann auch mehrere zweite Steckverbindungselemente zur Herstellung jeweils einer einzelnen steckbaren optischen Verbindung umfassen.

Die ersten Lichtwellenleiter werden in die Anschlussvorrichtung eingebracht. Dann wird die Anschlussvorrichtung an der ersten Zugentlastungsanordnung befestigt, so dass über die Anschlussvorrichtung eingeleitete mechanische Spannungen von der ersten Zugentlastungsanordnung aufgenommen werden können.

### Kurze Beschreibung der Figuren

Die Figuren 1A und 1B zeigen den Querschnitt einer Ausgestaltung des optischen Kabels gemäß der vorliegenden Erfindung.

Die Figuren 2A und 2B zeigen bevorzugte Ausgestaltungen des optischen Kabels gemäß der vorliegenden Erfindung.

Die Figur 3 zeigt ein Rangierfeld und die durch das Kabel gemäß der vorliegenden Erfindung hergestellten optischen Verbindungen.

Die Figuren 4A und 4B zeigen eine Ausgestaltung einer Anordnung zum Verbinden einer Vielzuhl von Lichtwellenleitern.

### Erläuterung beispielhafter Ausführungsformen der Erfindung

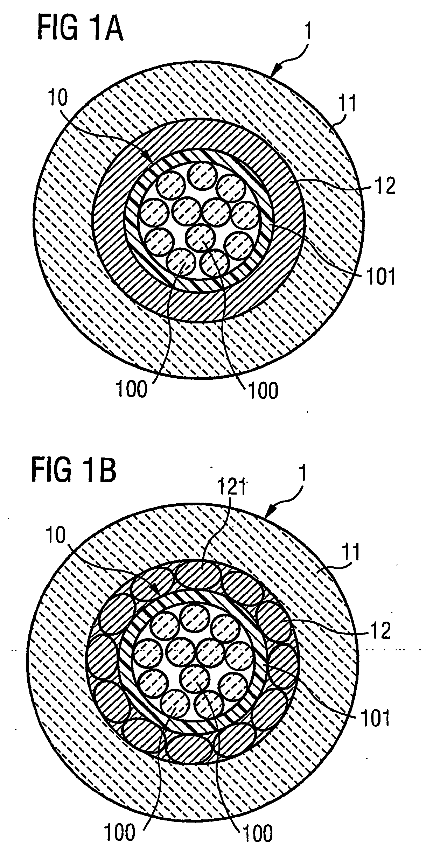

In den Figuren 1A und 1B ist ein Ausführungsbeispiel eines erfindungsgemäßen optischen Kabels im Querschnitt dargestellt. Das optische Kabel 1 ist ein Mehrfaserkabel (MFC = Multi Fiber Cable). Die ersten Lichtwellenleiter 100 sind von dem Kabelmantel 11 umgeben. Die ersten Lichtwellenleiter 100 können verschieden gefärbt sein. Zur Unterscheidung einer Anzahl von 2 bis 12 der ersten Lichtwellenleiter 100 kann eine entsprechende Anzahl verschiedener Farben eingesetzt werden. Zur Unterscheidung einer Anzahl von 13 bis 24 der ersten Lichtwellenleiter 100 können verschiedene Farben in Kombination mit Ringsignaturen eingesetzt werden. Bei einem Festaderkabel oder einem Bändchenkabel ist dagegen jeweils ein einzelner Lichtwellenleiter von einer Umhüllung umgeben.

Die Verkabelung eines Rangierfelds unter Verwendung des optischen Kabels 1 weist im Vergleich zu einer Verkabelung mit Festaderkabeln oder einer Verkabelung mit Bändchenkabeln einen geringeren Platzbedarf auf. Beispielsweise kann eine Anzahl von 12 Festaderkabeln durch das optische Kabel 1 ersetzt werden, dessen Ader 10 eine Anzahl von 12 ersten Lichtwellenleitern 100 enthält. Eine Ader mit mehr als einem Lichtwellenleiter wird auch als Bündelader bezeichnet. Das optische Kabel 1 weist beispielsweise einen Außendurchmesser von 2,8 mm auf, was dem Außendurchmesser eines Festaderkabels entspricht. Im Unterschied zu einem Bändchenkabel weist das optische Kabel 1 keine Vorzugsbiegerichtung auf. Der kleinste Biegeradius des optischen Kabels 1 ist also von der Biegerichtung unabhängig. Außerdem weist das optische Kabel 1 einen geringeren Platzbedarf auf als ein Bändchenkabel, bei dem jeder einzelne Lichtwellenleiter von einer Umhüllung umgeben ist. Die äußeren Konturen der Aderhülle der Ader sowie des Kabelmantels und somit das gesamte Kabel weisen je einen runden, insbesondere kreisrunden Querschnitt auf. Durch den kreisrunden Querschnitt ist eine Vorzugsbiegeebene vermieden. Die in der Ader befindlichen Lichtwellenleiter oder Lichtleitfasern sind lose angeordnet und umfassen nur die bloßen Fasern. Die Fasern sind nicht gepuffert. Die Fasern enthalten das lichtleitende Glas sowie die Claddingschicht und ein Polymercoating jedoch keine etwaige weitere Schutzhülle. Im Unterschied dazu weisen gepufferte Fasern noch eine weitere, die Claddingschicht umgebende Schutzhülle auf.

Der Kabelmantel 11 umfasst beispielsweise Polyethylen oder Polyurethan. Wünschenswerte Eigenschaften für ein Mantelmaterial sind Flammwidrigkeit und Korrosionsbeständigkeit. Bevorzugte Mantelmaterialien sind FRNC (Flame Retardant Non Corrosive) oder LSOH (Low Smoke Zero Halogen). Dies können Polyethylen oder Polyurethanmaterial mit eingelagerten Zusatzstoffe wie z.B. Natriumhydroxid oder Magnesiumhydroxid, sein, welche Zusatzstoffe die FRNC- oder LSOH-Eigenschaften bewirken. Der Kabelmantel 11 weist beispielsweise eine Dicke von 0,5 mm auf.

Die Ader 10 des optischen Kabels umfasst vorzugsweise eine Aderhülle, die die ersten Lichtwellenleiter umgibt und eine geringe Reißdehnung aufweist. Eine geringe Reißdehnung kann durch eine geringe Wandstärke oder durch Verwenden eines geeigneten Materials für die Aderhülle 101 erreicht werden. Beispielsweise kann das Material der Aderhülle ein Polymer, beispielsweise Ethyl-Vinyl-Acetat, Poly-Vinyl-Chlorid oder ein thermoplastisches Elastomer (TPE), mit einem darin eingebetteten Zuschlagsstoff oder Füllstoff enthalten. Durch Verwendung von Kreide als Zuschlagstoff wird die Reißdehnung der Aderhülle 101 herabgesetzt. Die Aderhülle 101 weist beispielsweise eine Dicke zwischen 0,1 mm und 0,2 mm auf. Eine solche Aderhülle ist einfach, schnell und ohne Werkzeug auch in größeren Längen absetzbar. Außerdem kann das optische Kabel im wesentlichen wie ein Festaderkabel konfektioniert werden.

Die Ader 10 des optischen Kabels weist außerdem einen trockenen Innenraum auf. Der Innenraum ist insbesondere frei von einer Füllmasse, beispielsweise einem thixotropen Gel. Das vereinfacht die Konfektionierung des optischen Kabels 1, weil keine Füllmasse austropfen kann. Das optische Kabel 1 ist daher als Innenkabel verwendbar. Außerdem werden die optischen Eigenschaften der ersten Lichtwellenleiter 100 durch die Konfektionierung nicht beeinflusst.

Die ersten Lichtwellenleiter 100 weisen bezogen auf den Kabelmantel 11 eine Überlänge auf, das heißt in einem Abschnitt des Kabelmantels 11, der eine bestimmte Länge aufweist, verlaufen Abschnitte der ersten Lichtwellenleiter 100, die eine etwas größere Länge aufweisen. Dadurch kann das optische Kabel 1 gebogen oder gedreht werden, ohne dass die ersten Lichtwellenleiter 100 übermäßigen mechanischen Zug- oder Druckspannungen ausgesetzt werden. Das optische Kabel 1 weist daher eine höhere Flexibilität und einen geringeren Biegeradius auf als ein Festaderkabel. Die erforderliche Überlänge kann insbesondere durch eine Verseilung der ersten Lichtwellenleiter 100 hergestellt werden.

Zwischen der Ader 10 und dem Kabelmantel 11 ist eine erste Zugentlastungsanordnung 12 ausgebildet . Die erste Zugentlastungsanordnung 12 enthält Aramid . Die erste Zugentlastungsanordnung 12 kann insbesondere mehrere Zugentlastungselemente 121 in Form von Strängen umfassen, die in gleichmäßiger Verteilung um die Ader 10 angeordnet sind. Die Zugentlastungselemente 121 können beispielsweise Aramidgarne enthalten.

Die in der Ader 10 des optischen Kabels 1 angeordneten ersten Lichtwellenleiter 100 können jeweils zur Führung einer oder mehrerer optischer Moden ausgebildet sein. Wenn einer der ersten Lichtwellenleiter 100 zur Führung einer einzigen optischen Mode ausgebildet ist, dann weist er einen Kernbereich mit höherem Brechungsindex und einen Mantelbereich mit geringerem Brechungsindex auf. Die Brechungsindices vom Kern- und Mantelbereich sind jeweils unabhängig vom Ort. Der Durchmesser des Kernbereichs beträgt typischerweise weniger als 10 Mikrometer. Wenn einer der ersten Lichtwellenleiter 100 zur Führung mehrerer optischer Moden ausgebildet ist, dann weist der Brechungsindex im Kernbereich ein vom Ort abhängiges Querschnittsprofil auf. Der Brechungsindex des Kernbereichs nimmt mit zunehmendem Radius kontinuierlich ab und geht an der Grenze zwischen Kern- und Mantelbereich stetig in den Brechungsindex des Mantelbereichs über, der vom Ort unabhängig ist.

Das optische Kabel 1 wird durch einen Prozess hergestellt, der mehrere Schritte umfasst. Zunächst werden die ersten Lichtwellenleiter 100 einer Aderlinie zugeführt. In der Aderlinie werden die ersten Lichtwellenleiter 100 mit der Aderhülle 101 umgeben. Üblicherweise wird eine Aderhülle 101 um die mehreren Lichtwellenleiter 100 extrudiert, wobei ein Material mit geringer Reißdehnung eingesetzt wird. Die ersten Lichtwellenleiter 100 werden miteinander verseilt oder locker in die Aderhülle 101 eingelegt, um eine Überlänge der ersten Lichtwellenleiter 100 in bezug auf die Aderhülle 101 zu erzeugen. Die auf diese Weise in der Aderlinie hergestellte A-der 10 wird einer Mantellinie zugeführt. In der Mantellinie werden um die Ader 10 die Zugentlastungsanordnung 12 und der Kabelmantel 11 ausgebildet. Die in der Mantellinie durchgeführten Schritte sind aus herkömmlichen Verfahren zur Herstellung von Festaderkabeln bekannt.

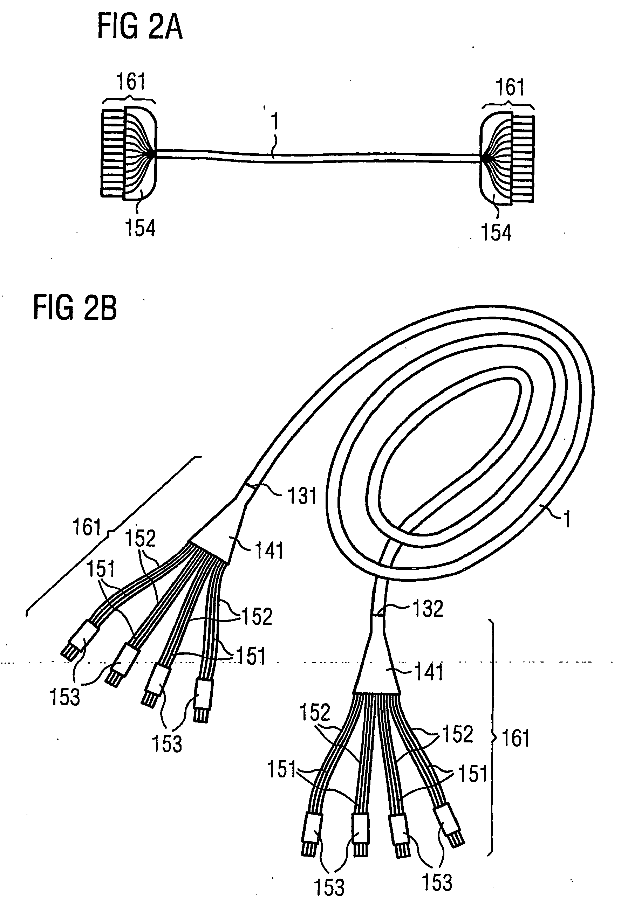

In den Figuren 2A und 2B ist ein bevorzugtes Ausführungsbeispiel für ein erfindungsgemäßes optisches Kabel perspektivisch dargestellt. Das optische Kabel 1 weist im Querschnitt jeweils den anhand von Figur 1 beschriebenen Aufbau auf. An seinen beiden Enden weist das optische Kabel 1 insbesondere jeweils eine Anschlussvorrichtung 161 auf, die an der ersten Zugentlastungsanordnung 12 befestigt ist.

Bei dem in Figur 2A dargestellten Ausführungsbeispiel umfasst die Anschlussvorrichtung 161 ein erstes Steckverbindungselement 154 zur Herstellung mehrerer steckbarer optischen Verbindungen. Das erste Steckverbindungselement 154 kann beispielsweise eine starr verbundene Duplex- oder allgemeiner Multiplex-Anordnung aus Steckverbindern nach ST- oder SC-Norm umfassen. Die mehreren ersten Lichtwellenleiter 100 des optischen Kabels 1 sind innerhalb des ersten Steckverbindungselements 154, beispielsweise durch Röhrchen (Ferrulen) aus Keramik oder Edelstahl, geführt und fixiert.

Bei dem in Figur 2B dargestellten Ausführungsbeispiel umfasst die Anschlussvorrichtung 161 ein Anschlusselement 141, mehrere Anschlussfasern (Pigtails), die jeweils einen zweiten Lichtwellenleiter 151 und eine diesen umgebende zweite Zugentlastungsanordnung 152 aufweisen, und mehrere zweite Steckverbindungselemente 153, die jeweils zur Herstellung einer einzelnen steckbaren optischen Verbindung ausgebildet sind.

Der zweite Lichtwellenleiter 151 ist beispielsweise über eine Spleißverbindung mit einem der ersten Lichtwellenleiter 100 optisch gekoppelt. Die zweiten Anschlusselemente 153 sind an der zweiten Zugentlastungsanordnung 152 befestigt. Die zweiten Steckverbindungselemente 153 können beispielsweise Einfach-Steckverbinder nach ST- oder SC-Norm sein. Jeweils einer der zweiten Lichtwellenleiter 151 wird in eines der zweiten Steckverbindungselemente 153 hineingeführt und in diesem, beispielsweise durch ein Röhrchen (Ferrule) aus Keramik oder Edelstahl, geführt und fixiert. Die zweiten Zugentlastungsanordnungen 152 der zweiten Lichtwellenleiter 151 werden an den Steckverbindungselementen 153 mit gefasst, um über diese eingeleitete Zugspannungen aufnehmen zu können.

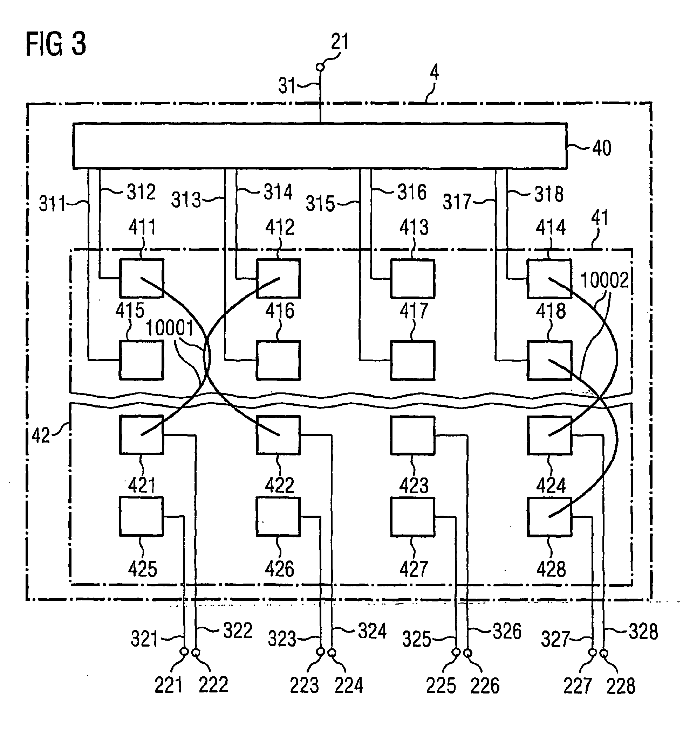

In der Figur 3 ist ein Beispiel für die Verkabelung eines Rangierfelds dargestellt. Das Rangierfeld 4 ist in einem Verteilerschrank angeordnet. Über die Lichtwellenleiter 311-318 ist das Rangierfeld 4 an das Netz 21 angeschlossen. Über die Lichtwellenleiter 321-328 ist das Rangierfeld 4 an die Peripherie 221-228 angeschlossen. Das Netz 21 ist insbesondere ein Kommunikationsnetz wie etwa ein Telefonnetz oder ein Datennetz. Die Peripherie 221-228 umfasst insbesondere eine Anzahl von Anschlussbuchsen für Endgeräte, beispielsweise Computer.

Das Rangierfeld 4 umfasst die in einem ersten Abschnitt 41 angeordneten ersten Anschlusspole 411-418 und die in einem zweiten Abschnitt 42 angeordneten zweiten Anschlusspole 421-428. In jeweils einem der ersten Anschlusspolen 411-418 ist einer der Lichtwellenleiter 311-318 fixiert. In jeweils einem der zweiten Anschlusspole 421-428 ist einer der Lichtwellenleiter 321-328 fixiert. Die Lichtwellenleiter 311-318 sind an den optischen Verteiler 40 angeschlossen. Der optische Verteiler 40 ist über den Lichtwellenleiter 31 an das Netz 21 angeschlossen. Die Lichtwellenleiter 321-328 sind an die Peripherie 221-228 angeschlossen.

Wenn zwischen einem der ersten Anschlusspole 411-418 und einem der zweiten Anschlusspole 421-428 eine optische Verbindung hergestellt wird, dann können über diese optische Verbindung Signale zwischen dem Netz 21 und der Peripherie 221-228 ausgetauscht werden. Beispielsweise können die zweiten Anschlusspole 421 und 422 oder die zweiten Anschlusspole 424 und 428 jeweils mit zwei in dem gleichen Raum angeordneten Anschlussbuchsen verbunden sein. Die Anschlussbuchsen der jeweiligen Räume können dann an das Netz 21 angeschlossen werden, indem über jeweilige optische Kabel 1 gemäß der Erfindung die optischen Verbindungen 10001 beziehungsweise 10002 zwischen den ersten Anschlusspolen 411 und 412 beziehungsweise 414 und 418 und den zweiten Anschlusspolen 421 und 422 beziehungsweise 424 und 428 hergestellt werden.

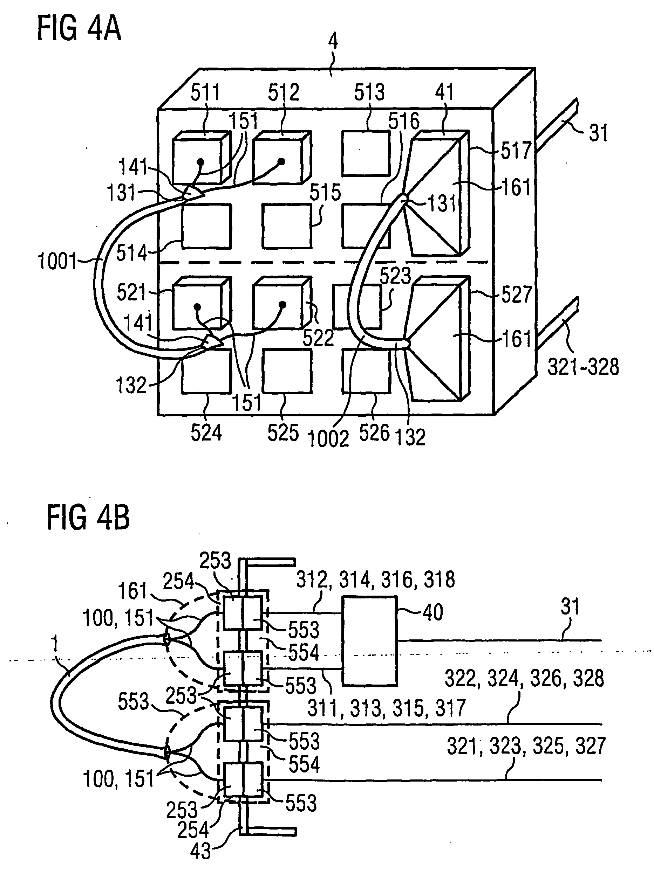

In den Figuren 4A und 4B sind Ausführungsbeispiele einer erfindungsgemäßen Anordnung zur Verbindung einer Vielzahl von Lichtwellenleitern dargestellt. Das Rangierfeld 4 weist die zwei Abschnitte 41 und 42 auf, die über verschiedene Ausgestaltungen 1001 und 1002 des erfindungsgemäßen optischen Kabels 1 miteinander verkabelt sind. Die Anschlusspole 411-418 und 421-428 sind so in den Abschnitten 41 und 42 angeordnet wie anhand der Figur 3 beschrieben. Die Bezugszeichen 411-418 und 421-428 sind in den Figuren 4A und 4B wegen der Übersichtlichkeit allerdings weggelassen. Die Anschlüsse 511-517 bzw. 521-527 umfassen jeweils genau einen der Anschlusspole 411-418 bzw. 421-428. Die Anschlüsse 511-516 bzw. 521-526 umfassen jeweils genau einen der Anschlusspole 411-413 und 415-417 bzw. 421-423 und 425-427. Die Anschlüsse 517 bzw. 527 umfassen die zwei Anschlusspole 414 und 418 bzw. 424 und 428.

Auf der Rückseite der Frontplatte 43 werden die mit dem Netz 21 verbundenen Lichtwellenleiter 311-318 den im ersten Abschnitt 41 angeordneten Anschlusspolen 411-418 und die mit der Peripherie 211-218 verbundenen Lichtwellenleiter 321-328 den im zweiten Abschnitt 42 angeordneten Anschlusspolen 421-428 zugeführt. Auf der Vorderseite der Frontplatte 43 verbindet das optische Kabel 1 eine Mehrzahl der ersten Anschlusspole 411-418 mit einer Mehrzahl der zweiten Anschlusspole 421-428. Dabei wird die optische Verbindung zwischen jeweils einem der ersten Anschlusspole 411-418 und einem der zweiten Anschlusspole 421-428 über einen der mehreren Lichtwellenleiter 100 des optischen Kabels 1 hergestellt.

Beispielsweise verbinden die Ausgestaltungen 1001 und 1002 des optischen Kabels 1 jeweils zwei ausgewählte der ersten Anschlusspole 411-418 und zwei ausgewählte der zweiten Anschlusspole 421-428 miteinander. In einem größeren Rangierfeld könnten aber auch beispielsweise 12 ausgewählte erste Anschlusspole und 12 ausgewählte zweite Anschlusspole über das optische Kabel 1 miteinander verbunden sein.

Die Ausgestaltung 1001 des optischen Kabels 1 weist Steckverbindungselemente 153 auf, die jeweils zur Herstellung einer steckbaren Verbindung zu einem Steckverbindungselement 253 der Anschlüsse 511-513, 515-517, 521-523 und 525-527 ausgebildet sind. Die Ausgestaltung 1002 des optischen Kabels 1 weist Steckverbindungselemente 154 auf, die jeweils zur Herstellung einer steckbaren Verbindung zu einem Steckverbindungselement 254 der Anschlüsse 517 und 527 ausgebildet sind.

Das Paar von Steckverbindungselementen 154 und 254 ist zur Herstellung zweier steckbarer optischer Verbindungen ausgebildet. Das Paar von Steckverbindungselementen 154 und 254 kann aber auch zur Herstellung einer höheren Zahl von optischen Verbindungen ausgebildet sein.

Es ist auch denkbar, ein Mehrfaserkabel an jeweils einem Ende mit einer Anschlussvorrichtung 161 zu versehen, die mehrere jeweils zur Herstellung mehrerer optischer Verbindungen ausgebildete Steckverbindungselemente umfasst. In einem Rangierfeld mit einer Anordnung von Anschlüssen für 3-fach-Steckverbindungen kann als Rangierkabel beispielsweise ein 12-Faserkabel eingesetzt werden, das an einem Ende eine Anschlussvorrichtung aufweist, die 4 jeweils für 3-fach Steckverbindungen ausgebildete Steckverbindungselemente umfasst.

### Bezugszeichenliste

- 1, 1001, 1002: Optisches Kabel
- 10: Bündelader
- 100: erster Lichtwellenleiter
- 10001, 10002: optische Verbindungen
- 101: Umhüllung
- 11: Kabelmantel
- 12: erste Zugentlastungsanordnung
- 121: Zugentlastungselemente
- 131, 132: erste und zweites Ende
- 141: Anschlusselement
- 151: zweiter Lichtwellenleiter
- 152: zweite Zugentlastungsanordnung
- 153: zweites Steckverbindungselement
- 154: erstes Steckverbindungselement
- 161: Anschlussvorrichtung
- 21: Netz
- 221-228: Peripherie
- 31: gemeinsamer Lichtwellenleiter
- 311-318: weitere Lichtwellenleiter
- 321-328: weitere Lichtwellenleiter Rangierfeld
- 40: optischer Verteiler
- 41: erster Abschnitt des Rangierfelds
- 42: zweiter Abschnitt des Rangierfelds
- 411-418: erste Anschlusspole
- 421-428: zweite Anschlusspole
- 511-517: erste Anschlüsse
- 521-527: zweite Anschlüsse
- 553, 554: Steckverbindungselemente

## Patentansprüche

1. Optisches Kabel (1), umfassend:
einen Kabelmantel (11),
genau eine Ader (10), umfassend eine Aderhülle (101) und eine Anzahl von 2 bis 12 Lichtwellenleitern (100), die innerhalb der Aderhülle (101) enthalten sind, wobei die Aderhülle (101) als Polymermaterial ausgebildet ist, in das ein Zuschlagstoff eingebettet ist, um eine geringe Reißdehnung zu erhalten, und wobei der Kabelmantel (11) die Aderhülle (101) umgibt,
eine zwischen der Aderhülle (101) und dem Kabelmantel (11) angeordnete Zugentlastungsanordnung (12), welche eine einzige Schicht von Strängen eines Aramidgarns (121) zur Zugentlastung umfasst
wobei das optische Kabel (1) einen Durchmesser von kleiner als oder gleich 3,0 mm, vorzugsweise 2,8 mm aufweist und das optische Kabel (1) und die genau eine Ader (10) jeweils einen runden Querschnitt aufweisen und das optische Kabel dazu ausgebildet ist, eine optische Verbindung zwischen weiteren Lichtwellenleitern herzustellen.

2. Optisches Kabel (1) nach Anspruch 1, bei dem das Polymermaterial ein Ethyl-Vinyl-Acetat oder ein Poly-Vinyl-Chlorid oder ein thermoplastisches Elastomer oder eine Kombination aus mindestens zweien davon enthält.

3. Optisches Kabel (1) nach einem der Ansprüche 1 oder 2, bei dem der Kabelmantel Polyethylen oder Polyurethan umfasst und mit flammhemmender Eigenschaft oder Low-Smoke-Zero-Halogen-Eigenschaft ausgebildet ist.

4. Optisches Kabel (1) nach Anspruch 2 oder 3, bei dem die Aderhülle (101) einen trockenen Innenraum (102) umgibt.

5. Optisches Kabel (1) nach einem der Ansprüche 1 bis 4, bei dem die Lichtwellenleiter (100) in bezug auf den Kabelmantel (11) eine Oberlänge aufweisen.

6. Optisches Kabel (1) nach einem der Ansprüche 1 bis 5, bei dem die Lichtwellenleiter (100) miteinander verseilt sind.

7. Optisches Kabel (1) nach einem der Ansprüche 1 bis 6, bei dem die Zugentlastungsanordnung (12) mehrere Stränge (121) umfasst, die in gleichmäßiger Verteilung um die Ader (10) angeordnet sind.

8. Optisches Kabel (1) nach einem der Ansprüche 1 bis 7, umfassend zwölf in der genau einen Ader (10) enthaltene Lichtleitfasern und aufweisend einen Außendurchmesser des Kabelmantels von 2,8 Millimeter.

## Claims

1. An optical cable (1), comprising:
a cable sheath (11),
one and only one core (10) comprising a core sleeve (101) and a plurality of 2 to 12 first optical waveguides (100), which are contained within the core sleeve (101), with the core sleeve (101) being formed from a polymer material that embeds an additive to reduce elongation at tear and the cable sheath (11) surrounding the core sleeve (10),
a strain relief arrangement (12) disposed between the core sleeve (101) and the cable sheath (11), the strain relief arrangement (12) comprising a single layer of strands of aramide yarn (121),
the optical cable (1) having a diameter of less than 3.0 mm, preferably a diameter of 2.8 mm, and the one and only one core (10) each having a round cross-section, and with the optical cable (1) adapted to produce an optical connection between further optical waveguides.

2. Optical cable according to claim 1, wherein the polymer material comprises an ethyl-vinyl acetate or a polyvinyl chloride, or a thermoplastic elastomer, or a combination of at least two thereof.

3. Optical cable (1) according to any of claims 1 or 2, wherein the cable sheath comprises polyethylene or polyurethane, and is adapted to have a flame-retardant characteristic or a low-smoke, zero-halogen characteristic.

4. Optical cable (1) according to claim 2 or 3, wherein the core sleeve (101) surrounds a dry internal area (102).

5. Optical cable (1) according to any of claims 1 to 4, wherein the optical waveguides (100) have excess length with regard to the cable sheath (11).

6. Optical cable according to any of claims 1 to 5, wherein the optical waveguides (100) are stranded with one another.

7. Optical cable (1) according to any of claims 1 to 6, wherein the strain-relief arrangement (12) comprises plurality of strands (121), which are arranged distributed uniformly around the core (10).

8. Optical cable (1) according to any of claims 1 to 7, comprising twelve optical waveguides disposed in the one and only one core (10) and having an external diameter of 2,8 millimeter.

## Revendications

1. Câble optique (1), comportant :
une gaine de câble (11),
exactement un brin (10), comportant une enveloppe de brin (101) et un nombre de 2 à 12 guides d'ondes optiques (100) qui sont contenus à l'intérieur de l'enveloppe de brin (101), l'enveloppe de brin (101) étant conçue comme matériau polymère dans lequel un additif est encastré pour obtenir un faible allongement à la rupture, et la gaine de câble (11) entourant l'enveloppe de brin (101),
un dispositif de décharge de traction (12) disposé entre l'enveloppe de brin (101) et la gaine de câble (11) et comportant une seule couche d'écheveaux d'un fil d'aramide (121) pour la décharge de traction,
le câble optique (1) présentant un diamètre inférieur ou égal à 3,0 mm, de préférence 2,8 mm, et le câble optique (1) et l'exactement un brin (10) présentant chacun une section ronde et le câble optique étant constitué de façon à établir une liaison optique entre des guides d'ondes optiques supplémentaires.

2. Câble optique (1) selon la revendication 1, où le matériau polymère contient un acétate éthylvinylique ou un chlorure polyvinylique ou un élastomère thermoplastique ou une combinaison d'au moins deux d'entre eux.

3. Câble optique (1) selon l'une des revendications 1 ou 2, où la gaine de câble comporte du polyéthylène ou du polyuréthane et est conçue avec une propriété ignifugeante ou une propriété de faible dégagement de fumée et sans halogène.

4. Câble optique (1) selon la revendication 2 ou 3, où l'enveloppe de brin (101) entoure un espace intérieur sec (102).

5. Câble optique (1) selon l'une des revendications 1 à 4, où les guides d'ondes optiques (100) présentent une surlongueur par rapport à la gaine de câble (11).

6. Câble optique (1) selon l'une des revendications 1 à 5, où les guides d'ondes optiques (100) sont toronnés entre eux.

7. Câble optique (1) selon l'une des revendications 1 à 6, où le dispositif de décharge de traction (12) comporte plusieurs écheveaux (121) qui sont disposés autour du brin (10) selon une répartition régulière.

8. Câble optique (1) selon l'une des revendications 1 à 7, comportant douze fibres optiques contenus dans l'exactement un brin (10) et présentant un diamètre extérieur de la gaine de câble de 2,8 mm.
